# EUROPÄISCHE PATENTANMELDUNG

(11) **EP 2 187 279 A1**
(43) Veröffentlichungstag der Anmeldung: **19.05.2010**
(21) Anmeldenummer: 09013841.3
(22) Anmeldetag: 04.11.2009
(51) Int. Cl.: G05B 19/042, G05B 19/05, G06F 1/30, G06F 11/14

(54) **Zentralbaugruppe eines Automatisierungsgerätes mit nichtflüchtigem Speicher zur Datenerhaltung bei Ausfall der Spannungsversorgung**

(30) Priorität: 18.11.2008 DE 102008058061
(71) Anmelder: ABB AG, 68309 Mannheim (DE)
(72) Erfinder: Gaub, Gernot, 68766 Hockenheim (DE); Blei, Brigitte, 10405 Berlin (DE); Wilmers, Andreas, 69123 Heidelberg (DE)

(57) **Zusammenfassung**

Die Erfindung betrifft eine Zentralbaugruppe für ein flexibles erweiterbares Automatisierungsgerät mit wenigstens einem über einen Ein-/Ausgabebus (3) anschließbares externes, vorzugsweise als externes Ein-/ Ausgabemodul ausgeführtes, Erweiterungsmodul (2) , wobei im Gehäuse (200) der Zentralbaugruppe eine Schnittstelle für den Anschluss des externen Ein-/ Ausgabemoduls, eine erste Elektronikbaugruppe (11) mit einer als Mikrocontroller ausgeführten Zentraleinheit, eine zweite Elektronikbaugruppe (21) mit Ein- und Ausgängen für den Anschluss von Prozesssignalen und eine dritte Elektronikbaugruppe (31) zur Spannungsversorgung der Zentralbaugruppe angeordnet sind.

Die erste Elektronikbaugruppe (11) der Zentralbaugruppe weist einen ersten Mikrocontroller (16), einen flüchtigen Speicher (17) zur Speicherung von remanenten Daten, beispielsweise eines Betriebssystems, eines Anwenderprogramms und/oder Anwenderprogrammvariable, und einen Flashspeicher (18) für eine nullspannungssicheren Speicherung der Daten auf. In den Speichern ist jeweils wenigstens ein vom ersten Mikrocontroller (16) ausführbares Anwenderprogramm (PROGR) abgelegt. Im Anwenderprogramm (PROGR) ist eine erste Funktion integriert, welche die Daten bei einem Ausfall der Spannungsversorgung der Zentralbaugruppe im Flash-Speicher (18) ablegt. Weiterhin ist im Anwenderprogramm (PROGR) eine zweite Funktion integriert, welche bei einer Spannungswiederkehr mittels der zweiten Funktion die zuvor im Flash-Speicher (18) abgelegten Daten in den flüchtigen Speicher (17) kopiert.

## Beschreibung

Die Erfindung betrifft eine Zentralbaugruppe für ein flexibles erweiterbares Automatisierungsgerät, auch als speicherprogrammierbare Steuerung bezeichnet, gemäß dem Oberbegriff des Anspruches 1.

Marktübliche oder in Patentdokumenten beschriebene erweiterbare Automatisierungsgeräte, auch als speicherprogrammierbare Steuerungen bekannt, sind an unterschiedlichste Automatisierungsaufgaben anpassbar und werden insbesondere im Bereich der industriellen Automatisierungstechnik und im Bereich der Schalt- und Steuerungstechnik eingesetzt.

Automatisierungsgeräte sind üblicherweise modular aus einer Zentralbaugruppe, Kommunikationskopplern und Erweiterungsmodulen, wie externe Ein-/Ausgabegeräte, aufgebaut. Die Zentralbaugruppe gemäß dem bekannten Stand der Technik umfasst verschiedene Baugruppen, wie eine Zentraleinheit, auch als CPU bezeichnet, eine Spannungsversorgung und eine Schnittstelle für den Anschluss von externen Ein- und Ausgabemodulen. Die externen Ein-/ Ausgabemodule sind über eine als Ein/Ausgabebus ausgeführte interne Busverbindung elektrisch mit der Zentralbaugruppe verbunden.

Gegenwärtig basiert eine nullspannungssichere Speicherung von remanenten Daten, also von Programmvariablen, beispielsweise eines Betriebssystems bzw. eines Anwenderprogramms, auf statischen Datenspeicherbausteinen, die bei ausgeschaltetem Automatisierungsgerät aus einem Energiespeicher (Batterie, Kondensator oder Akkumulator) mit einer Versorgungsspannung versorgt werden und daher die Werte der Variablen halten können.

Der Erfindung liegt die Aufgabe zugrunde eine Zentralbaugruppe für ein flexibles erweiterbares Automatisierungsgerät anzugeben, bei dem eine nullspannungssichere Speicherung von Daten, insbesondere von Variablen eines Anwenderprogramms, unabhängig von einem Energiespeicher in der Zentralbaugruppe gewährleistet ist sowie die Rechenleistung der CPU der Zentralbaugruppe reduziert ist.

Diese Aufgabe wird erfindungsgemäß durch eine Zentralbaugruppe für flexibles erweiterbares Automatisierungsgerät mit den in Anspruch 1 angegebenen Merkmalen gelöst. Vorteilhafte Ausgestaltungen und Verbesserungen der erfindungsgemäßen Zentralbaugruppe sind in weiteren Ansprüchen und in der Beschreibung angegeben.

Die erfindungsgemäße Zentralbaugruppe ist mit wenigstens einem über einen Ein- /Ausgabebus anschließbares externes, vorzugsweise als externes Ein-/ Ausgabemodul ausgeführtes, Erweiterungsmodul erweiterbar. Im Gehäuse der Zentralbaugruppe ist eine Schnittstelle für den Anschluss des externen Ein-/ Ausgabemoduls, eine erste Elektronikbaugruppe mit einer als Mikrocontroller ausgeführten Zentraleinheit, eine zweite Elektronikbaugruppe mit Ein- und Ausgängen zum Anschluss der Zentralbaugruppe an einen Prozess und eine dritte Elektronikbaugruppe zur Spannungsversorgung der Zentralbaugruppe angeordnet.

Die erste Elektronikbaugruppe der Zentralbaugruppe weist einen ersten Mikrocontroller, einen flüchtigen Speicher zur Speicherung von Daten, beispielsweise eines Betriebssystems, eines Anwenderprogramms und von Variablen des Anwenderprogramms während des Betriebes der Zentralbaugruppe, einen Flashspeicher für eine nullspannungssichere Zwischenspeicherung der im flüchtigen Speicher abgelegten Daten. In den Speichern ist jeweils wenigstens ein Anwenderprogramm und ein Betriebssystem, auch als Firmware bezeichnet, abgelegt.

Die aus dem flüchtigen Speicher in den Flash-Speicher übertragenen Daten werden nachfolgend als remanente Daten bezeichnet, da bei einem Spannungsausfall der Zentralbaugruppe im Flash-Speicher erhalten bleiben.

Befindet sich die Zentralbaugruppe des Automatisierungsgerätes im Betriebszustand, sind die remanenten Daten im flüchtigen Speicher gespeichert und werden durch das Anwenderprogramm des Speichers genutzt. Das Anwenderprogramm wird durch den ersten Mikrocontroller ausgeführt.

Erfindungsgemäß ist im Anwenderprogramm eine erste Funktion integriert, welche die remanenten Daten bei einem Ausfall der Spannungsversorgung der Zentralbaugruppe im Flash-Speicher ablegt.

Weiterhin ist im Anwenderprogramm eine zweite Funktion integriert, welche bei einer Spannungswiederkehr mittels der zweiten Funktion die zuvor im Flash-Speicher abgelegten Daten wieder in den flüchtigen Speicher kopiert.

Der Datenaustausch zwischen dem flüchtigen Speicher und dem Flash-Speicher wird vom ersten Mikrocontroller über einen internen Adress/Daten-Steuerungsbus ausgeführt.

Durch die Nutzung des Flash-Speichers für eine Zwischenablage der Daten ist somit in vorteilhafter Weise eine nullspannungssichere Speicherung der Daten, vorzugsweise der Anwenderprogrammvariablen, der Zentralbaugruppe des Automatisierungsgerätes gewährleistet.

In einer Ausgestaltung der erfindungsgemäßen Zentralbaugruppe ist auf der zweiten Elektronikbaugruppe der Zentralbaugruppe ein zweiter kostengünstiger Mikrocontroller als Vorverarbeiter vorgesehen, welcher mit den auf der zweiten Elektronikbaugruppe angeordneten Ein- und Ausgängen verbunden ist und die an den Ein- und Ausgängen anliegenden Prozessspannungen, Schalt- und/oder Steuersignale aus dem Prozess sowie die aus dem ersten Mikrocontroller ausgegebenen Signale, nachfolgend auch als Prozeßsignale bezeichnet, für den ersten Mikrocontroller steuert und auswertet. Die Vorverarbeitung der Prozeßsignale erfolgt mittels im zweiten Mikrocontroller abgelegten Programmen.

Beispiele für Funktionen der Vorverarbeitung sind:
- eine Eingangsfilterung für digitale Eingangssignale mit parametrierbarer Zeitkonstante,
- eine Realisierung von Analogwertmessungen,
- eine Realisierung von Analogwertausgaben,
- Zählerfunktionen, wie beispielsweise ein Vorwärts-/Rückwärtszählen oder Inkrementalsignale als schnell arbeitende Zählerfunktion, und
- Bereitstellung eines Digitalausgangs mit periodischem Rechtecksignal mit einstellbarer Pulsweite.

Der in der erfindungsgemäßen Zentralbaugruppe befindliche zweite als Vorverarbeiter eingesetzte Mikrocontroller ermöglicht in vorteilhafter Weise, die Rechenleistung des ersten zentralen Mikrocontrollers der Zentralbaugruppe des Automatisierungsgerätes zu reduzieren.

Auch durch die Integration einer schnell arbeitenden Zählerfunktion im zweiten Mikrocontroller wird die Rechenleistung des ersten Mikrocontrollers für diese Funktion ebenfalls nicht beansprucht.

In einer vorteilhaften Ausgestaltung der erfindungsgemäßen Zentralbaugruppe ist vorgesehen, für die Realisierung von Analogwertmessungen und Analogwertausgaben teilweise die Hardwarestruktur des zweiten Mikrocontrollers, beispielsweise mittels eines im zweiten Mikrocontroller integriertem Digitalwandlers, ohne Beanspruchung der Rechenleistung des ersten Mikrocontrollers, zu benutzen.

In einer besonderen Ausgestaltung der Zentralbaugruppe ist der zweite Mikrocontroller der Zentralbaugruppe mit einer parametrierbare Eingangssignalfilterung für digitale Eingangssignale verbunden, wobei die Funktion der parametrierbaren Eingangssignalfilterung im Anwenderprogramm des zweiten Mikrocontrollers integriert ist.

Die Kommunikation zwischen dem ersten und dem zweiten Mikrocontroller wird über eine serielle Kommunikationsschnittstelle realisiert.

Für eine schnelle Signalübertragung zwischen dem ersten und dem zweiten Mikrocontroller, beispielsweise wenn die Schnelligkeit einer seriellen Übertragung über die Kommunikationsschnittstelle nicht ausreicht, ist in einer weiteren vorteilhaften Ausgestaltung der erfindungsgemäßen Zentralbaugruppe der erste Mikrocontroller mit dem zweiten Mikrocontroller über parallele digitale Signalleitungen verbunden.

Die drei Elektronikbaugruppen der Zentralbaugruppe sind vorzugsweise auf jeweils einem separaten Träger, der als Leiterplatte oder Platine ausgeführt ist, angeordnet. Vorzugsweise ist der dritte Träger mit der dritten Elektronikbaugruppe zwischen dem zweiten Träger mit der zweiten Elektronikbaugruppe und dem ersten Träger mit der ersten Elektronikbaugruppe angeordnet.

Der erste und der zweite Träger der Zentralbaugruppe sind mit dem dritten Träger mechanisch und elektrisch verbunden. Vorzugsweise sind die Träger zur mechanischen und elektrischen Verbindung untereinander verlötet, beispielsweise wird die Verbindung der Träger mittels verlöteter Stifte realisiert. Dadurch entfällt die Steckverbindung zwischen den einzelnen Trägern und es wird eine bessere mechanische Stabilität erreicht.

Die Träger sind in im wesentlichen rechtwinklig zueinander angeordnet, wobei der dritte die Spannungsversorgung sowie die Schnittstelle für den Anschluss der externen Ein- und Ausgabemodule aufnehmende Träger zwischen dem zweiten die internen Ein- und Ausgabemodule aufnehmenden Träger und dem ersten die Zentraleinheit aufnehmenden Träger angeordnet ist.

In einer bevorzugten Ausführungsform der Zentralbaugruppe weisen nur der erste und der dritte Träger Anschlusselemente, vorzugsweise steckbare oder verlötbare Klemmen, Steckerleisten oder Klemmenblöcke auf, beispielsweise zum Anschluss externer Signale weiterer externer Erweiterungsmodule, die beispielsweise als Ein- und Ausgabemodule ausgeführt sind. Somit wird eine Reduktion der Steckverbindungen zwischen den drei Elektronikbaugruppen bzw. Trägern erreicht, da die Träger miteinander verlötet sind und die elektrische Verbindung zwischen den Trägern ohne zusätzliche Steckverbindungen gewährleistet ist.

In einer bevorzugten Ausführungsform der Zentralbaugruppe sind auf dem erste Träger auch die Ethernet-Schnittstelle und/oder eine Vorrichtung als Steckplatz für die Aufnahme von nachrüstbarem Zubehör vorgesehen. Das nachrüstbare Zubehör können austauschbare Leiterplatten für weitere Interfaceschaltungen, Speicherkarten oder zur Aufnahme einer Echtzeituhr sein.

Durch den vereinfachten mechanischen Aufbau der Zentralbaugruppe bezüglich der Integration der funktional unterschiedlichen Baugruppen entsprechend ihren Funktionen auf drei Trägern gestaltet sich die Herstellung der Zentralbaugruppe kostengünstig, da die auf den verschiedenen Trägern angeordneten Elektronikbaugruppen mit dem jeweils optimal geeigneten Lötprozess gefertigt werden können.

Anhand der in den folgenden Figuren dargestellten Ausführungsformen sollen die Erfindung sowie vorteilhafte Ausgestaltungen, Verbesserungen und weitere Vorteile der Erfindung näher erläutert und beschrieben werden.

Es zeigen:
- **Fig.** 1: ein beispielhaftes Automatisierungsgerät,
- **Fig.** 2: eine beispielhafte Ausführung der Hardwarestruktur der Zentralbaugruppe
- **Fig.** 3: beispielhaft die Ausführung der ersten Elektronikbaugruppe
- **Fig.** 4: beispielhaft die Ausführung der zweiten Elektronikbaugruppe mit den Ein- und Ausgängen
- **Fig.** 5: eine beispielhafte Ausführung der dritten Elektronikbaugruppe mit der Spannungsversorgung der Zentralbaugruppe,
- **Fig.** 6: eine beispielhafte Ausführung einer Zentralbaugruppe für ein flexibles erweiterbares Automatisierungsgerät,
- **Fig.** 7: eine beispielhafte Ausführung der Leiterplatten der Zentralbaugruppe mit den darauf angeordneten Elektronikbaugruppen,
- **Fig.** 8: eine beispielhafte Verbindungslösung der Leiterplatten untereinander, und
- **Fig.** 9: eine Ausführungsform der auf der ersten Leiterplatte befindlichen Vorrichtung als Steckplatz für die Aufnahme von nachrüstbarem Zubehör.

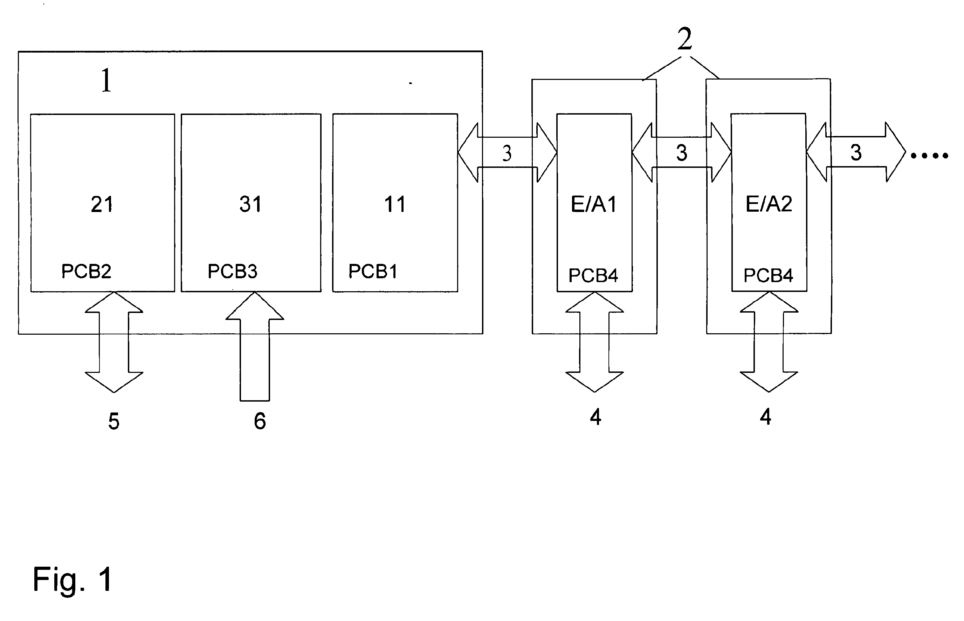

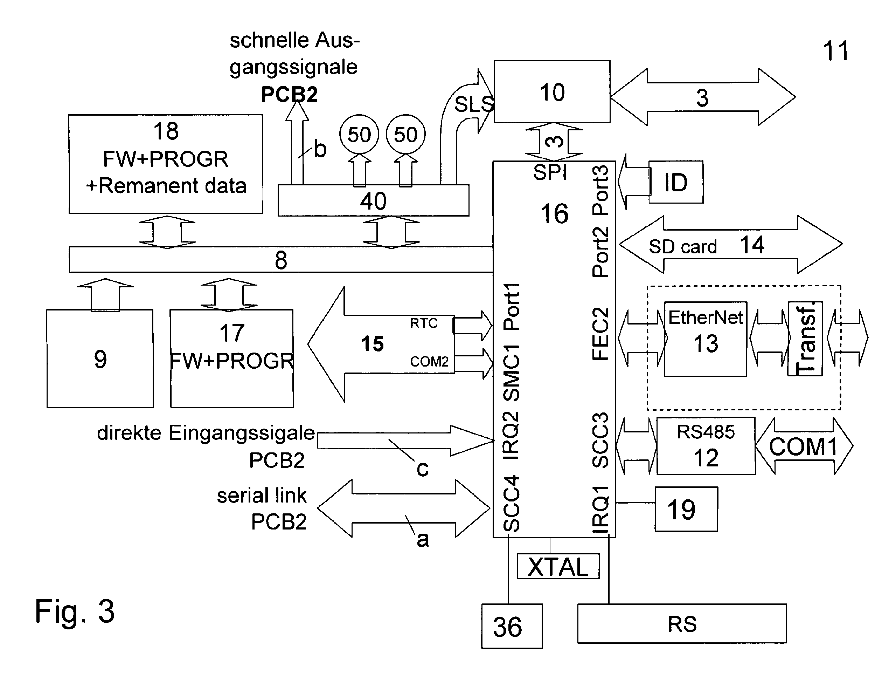

**Fig.** 1 zeigt ein beispielhaftes Automatisierungsgerät mit der erfindungsgemäße Zentralbaugruppe 1, die mit mehreren über einen Ein-/Ausgabebus 3 und ein in **Fig.** 3 dargestelltes Bus-Logikmodul 10 anschließbaren externen, vorzugsweise als externe Ein-/Ausgabemodule ausgeführte, Erweiterungsmodule 2 erweiterbar ist.

Die externen Ein-/ Ausgabemodule 2 weisen jeweils eine aus einer oder mehreren Leiterplatten bestehenden Baugruppe PCB4 zur Aufnahme der Elektronikbaugruppen EA1, EA2 der externen Ein-/Ausgabemodule 2 auf und sind jeweils über eine Schnittstelle 4 mit dem an das Automatisierungsgerät angeschlossenen Prozess verbunden.

Das Gehäuse 200 der Zentralbaugruppe 1 umfasst drei Leiterplatten PCB1, PCB2, PCB3. Die erste Leiterplatte PCB1 ist zur Aufnahme einer ersten Elektronikbaugruppe 11 für eine aus Mikrocontroller, Speicher und Logikbausteinen ausgeführte Zentraleinheit vorgesehen. Weiterhin ist auf der Leiterplatte PCB1 die Logik für den Ein- /Ausgabebus 3 angeordnet.

Auf der zweiten Leiterplatte PCB2 befindet sich eine zweite Elektronikbaugruppe 21 mit einer Schnittstelle 5 zum Anschluss der Ein- und Ausgänge der Zentralbaugruppe 1 an den Prozess.

Die dritte Leiterplatte PCB3 ist zur Aufnahme einer dritten Elektronikbaugruppe 31 mit der Spannungsversorgung 6 der Zentralbaugruppe 1 vorgesehen.

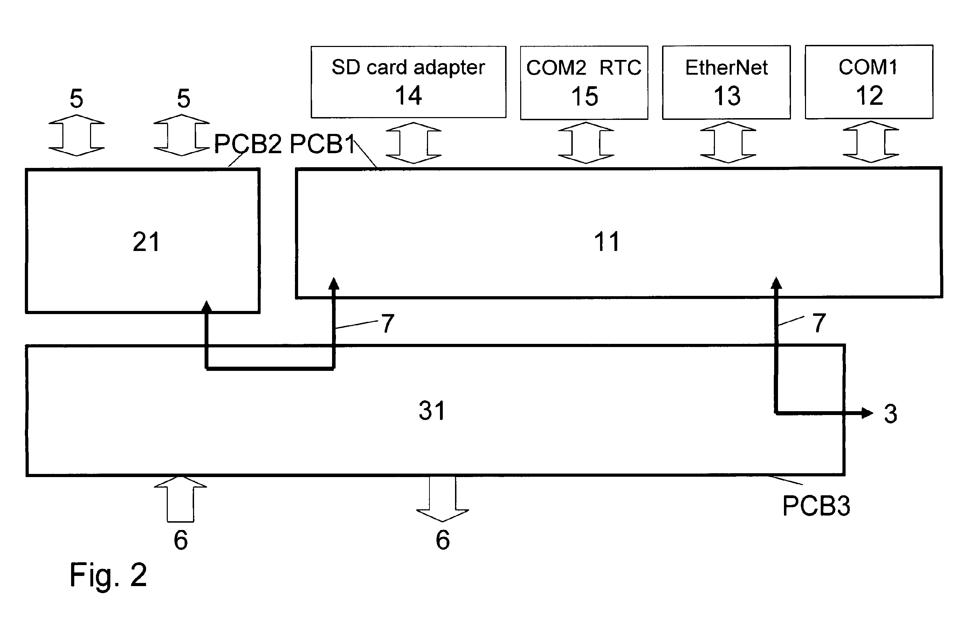

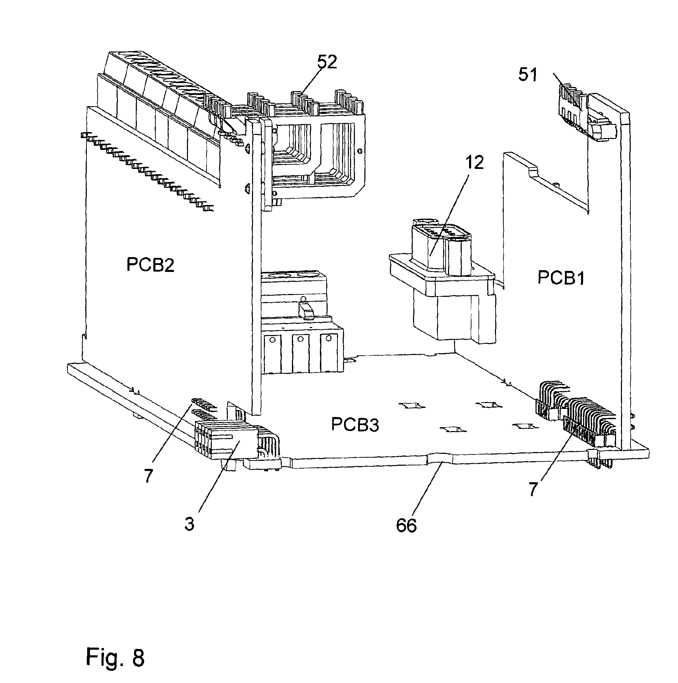

**Fig.** 2 zeigt eine beispielhafte Ausführung der Hardwarestruktur der Zentralbaugruppe 1 mit den auf den Leiterplatten PCB1, PCB2, PCB3 angeordneten drei Elektronikbaugruppen 11, 21, 31. Die Leiterplatten PCB1, PCB2, PCB3 und Elektronikbaugruppen 11, 21, 31 sind mechanisch und elektrisch miteinander verbunden, wobei die **Fig.** 8 beispielhaft die Verbindung 7 der Leiterplatten PCB1, PCB2, PCB3 untereinander zeigt.

Die erste Elektronikbaugruppe 11 der Zentralbaugruppe 1 weist als Schnittstellen ausgeführte Anschlüsse für eine als RS485 ausgeführte serielle Schnittstelle 12 und eine Ethernet-Schnittstelle 13 auf.

Optional können auch eine Schnittstelle 14 für weitere Interfaceschaltungen, z.B. für zusätzliche Speicherkarten, die beispielsweise als SD- Memory Card (Secure Digital Memory Card) ausgeführt sind, und eine weitere Schnittstelle (COM2 RTC) 15 zur Verbindung mit einer zusätzlichen Leiterplatte für die Aufnahme einer Echtzeituhr und/oder einer zweiten seriellen Schnittstelle vorgesehen sein.

Die zweite Leiterplatte PCB2 mit den Anschlüssen 5 für digitale Ein- und Ausgangssignale des angeschlossenen Prozesses ist über die Verbindung 7 mit den Elektronikbaugruppen 11, 31 auf der ersten und dritten Leiterplatte PCB1, PCB3 elektrisch verbunden.

Die Spannungsversorgung 6 wird der Zentralbaugruppe 1 über die dritte Leiterplatte PCB3 zugeführt.

Die Anschlüsse für die externen Ein-/ Ausgabemodule über den Ein-/Ausgabebus 3 sind auf der dritten Leiterplatte angeordnet.

**Fig.** 3 zeigt beispielhaft die Ausführung der ersten Elektronikbaugruppe 11 der Zentralbaugruppe 1 auf der Leiterplatte PCB1.

Die erste Elektronikbaugruppe 11 weist einen ersten Mikrocontroller 16, einen flüchtigen Speicher 17 zur Speicherung von Daten, wie dem Betriebssystem, dem Anwenderprogramm und der Anwenderprogrammvariable während der Laufzeit, einen Flashspeicher 18 für eine Zwischenspeicherung der im flüchtigen Speicher 17 abgelegten Daten und eine Vorrichtung 9 für die Anfangskonfiguration des ersten Mikrocontrollers 16 auf. In den Speichern 17, 18 ist jeweils wenigstens ein Anwenderprogramm PROGR und ein Betriebssystem FW abgelegt.

Der erste Mikrocontroller 16 ist mit Anschlüssen SPI, SCC3, SCC4, SMC1, FEC2 für die parametrierbaren seriellen Schnittstellen 3, 10, 12, 13, 15, einem Anschluss IRQ1 zur Spannungsausfalldetektion 19, einer Spannungsversorgung 36, die einer von der dritten Elektronikbaugruppe 31 bereitgestellten Spannungsversorgung 36 versorgt wird, und einem RUN/STOP- Schalter RS, der auch als Taster ausgeführt sein kann, ausgestattet.

Mit dem RUN/STOP- Schalter RS werden die Programme der Zentralbaugruppe 1 gestartet oder angehalten, indem mit dem RUN/STOP- Schalter RS zwischen RUN und STOP umgeschaltet wird.

An den Anschluss SCC3 ist eine RS485 Schnittstelle angeschlossen. Der Anschluss FEC2 ist für eine Ethernet-Schnittstelle 13 vorgesehen und der Anschluss SCC4 ist für eine serielle Kommunikation a des ersten Mikrocontrollers 16 mit einem auf der zweiten Leiterplatte PCB2 befindlichen zweiten Mikrocontroller 26, beispielsweise vom Typ AT-Mega16, vorgesehen.

In einer besonders vorteilhaften Ausgestaltung sind für eine schnelle Signalübertragung zwischen dem auf der ersten Elektronikbaugruppe 11 angeordnetem MPC852- Controller 16 und dem auf der zweiten Leiterplatte PCB2 angeordnetem zweiten Mikrocontroller 26 parallele digitale Signalleitungen b vorgesehen, die die Ausgangssignale vom MPC852- Controller 16 über den Adress/Daten-Steuerungsbus 8 und den Daten- bzw. Signalspeicher 40 an den zweiten Mikrocontroller 26 der zweiten Elektronikbaugruppe 21 übertragen.

Weiterhin sind an einem weiteren Anschluss IRQ2 des MPC852- Controllers 16 weitere parallele digitale Signalleitungen c anschließbar, die in vorteilhafter Weise eine schnelle Übertragung der über die zweite Leiterplatte PCB2 geführten digitalen Prozeßsignale ermöglichen.

Optional ist der erste Mikrocontroller 16 an seinen Anschlüssen SMC1 und Port1 über eine auf der dritten Leiterplatte PCB3 angeordneten Steckverbindung für eine weitere Schnittstelle 15 mit einer zusätzlichen Leiterplatte für die Aufnahme einer Echtzeituhr RTC und/oder einer zweiten seriellen Schnittstelle COM2 verbunden.

Als erster Mikrocontroller 16 wird gemäß der **Fig.** 3 beispielhaft ein MPC852- Controller aus der PPC-Familie gezeigt. PPC (PowerPC) steht stellvertretend für die verwendete Mikrocontrollertechnologie. Die Anschlüsse SPI, SCC3, SCC4, SMC1, FEC2 der seriellen Schnittstellen 3, 12, 13, 15 des als Beispiel genannten MPC852-Controllers können auch in einer anderen Zuordnung verwendet werden bzw. es können auch andere Mikrocontrollertypen der PPC Familie oder Mikrocontrollertypen aus anderen Mikrocontrollerfamilien eingesetzt werden.

Eine nullspannungssichere Speicherung der Daten der Zentralbaugruppe 1 des Automatisierungsgerätes wird erfindungsgemäß dadurch realisiert, dass im Betriebszustand der Zentralbaugruppe 1 die remanenten Daten im flüchtigen Speicher 17 gespeichert sind und durch ein im Speicher abgelegtes Anwenderprogramm PROGR vom MPC852-Controller 16 genutzt werden. Das Anwenderprogramm PROGR wird durch den MPC852- Controller 16 ausgeführt.

Erfindungsgemäß ist im Anwenderprogramm PROGR eine erste Funktion integriert, welche die remanenten Daten bei einem Ausfall der Spannungsversorgung 6 der Zentralbaugruppe 1 im Flash-Speicher 18 ablegt.

Weiterhin ist im Anwenderprogramm PROGR eine zweite Funktion integriert, welche bei einer Spannungswiederkehr mittels der zweiten Funktion die zuvor im Flash-Speicher 18 abgelegten Daten wieder in den flüchtigen Speicher 17 kopiert.

Der Datenaustausch zwischen dem Flash-Speicher 18 und dem MPC852- Controller 16 sowie der Datenaustausch zwischen dem flüchtigen Speicher 17, dem Flash-Speicher 18 und der Vorrichtung 9 zum initialisieren der Anfangskonfiguration des ersten Mikrocontrollers 16 wird über einen internen Adress/Daten-Steuerungsbus 8 ausgeführt.

Der Adress/Daten-Steuerungsbus 8 ist weiterhin über einen Daten- bzw. Signalspeicher 40 mit Anzeigemitteln 50, beispielsweise zur Anzeige von Fehlermeldungen und/oder des Betriebszustandes der Zentralbaugruppe 1, verbunden.

Der Daten- bzw. Signalspeicher 40 ist, wie auch der MPC852- Controller 16 (am Anschluss SPI), mit einem Bus-Logikmodul 10 zur Anpassung der Steuersignale des Ein- /Ausgabebus 3 verbunden.

Das Bus-Logikmodul 10 ist als fest verdrahtete Logik ausgeführt und für den Anschluss weiterer externer Ein-/ Ausgabemodule über den Ein-/Ausgabebus 3 vorgesehen.

Der MPC852- Controller 16 kann optional einen Anschluss für weitere Interfaceschaltungen 14, z.B. für zusätzliche Speicherkarten aufweisen.

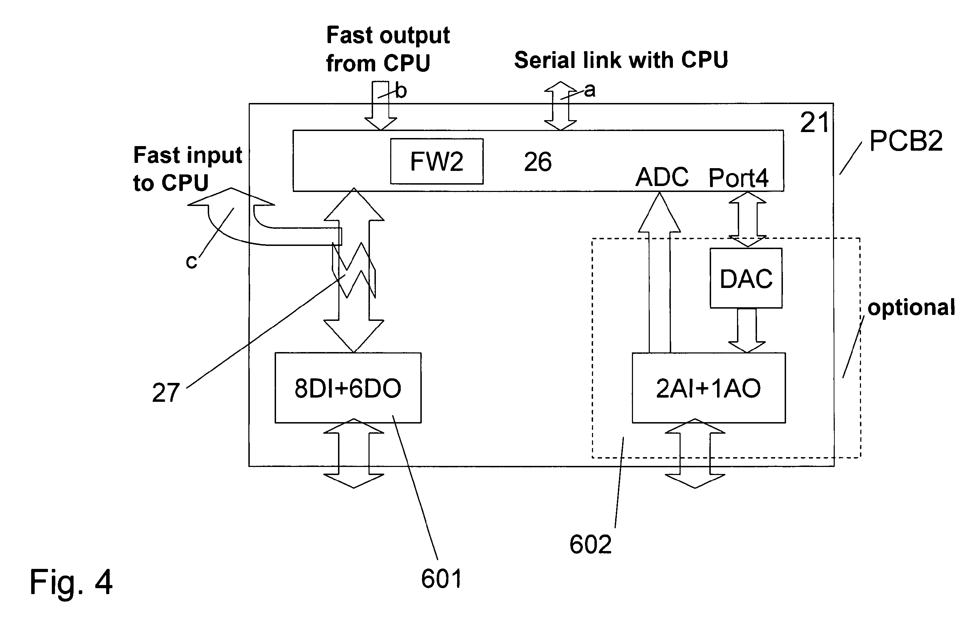

**Fig.** 4 zeigt beispielhaft die Ausführung der zweiten Elektronikbaugruppe 21 mit den Ein- und Ausgängen DI, DO, AI, AO zum angeschlossenen Prozess, die auf der zweiten Leiterplatte PCB2 angeordnet ist.

An den internen Ein-/Ausgängen bzw. Ein- und Ausgangsschaltungen 601, 602 werden die Pegel der Signale umgewandelt. Typische Pegel auf der Prozessseite sind 0 bzw. 24V Gleichspannung für Digitalsignale bzw. 0 bis 10V oder 0 bis 20mA für Analogsignale. Die digitalen Eingänge DI und digitalen Ausgänge DO werden mit galvanischer Trennung 27 von dem Potential des zweiten Mikrocontrollers 26 isoliert.

Die zweite Elektronikbaugruppe 21 mit dem darauf angeordnetem zweiten Mikrocontroller 26 ist durch die Verbindung a über die serielle Schnittstelle mit dem ersten Mikrocontroller 16 verbunden.

Weiterhin kann der zweite Mikrocontroller 26 über die Signalleitungen b, c mit der ersten Elektronikbaugruppe 11 verbunden sein.

Für die schnelle Signalübertragung zwischen dem auf der ersten Elektronikbaugruppe 11 angeordnetem ersten Mikrocontroller 16 und dem auf der zweiten Leiterplatte PCB2 angeordnetem zweiten Mikrocontroller 26 sind parallele digitale Signalleitungen b vorgesehen, die die Ausgangssignale vom ersten Mikrocontroller 16 über den auf der ersten Elektronikbaugruppe 11 angeordneten Daten- bzw. Signalspeicher 40 und den Adress/Daten-Steuerungsbus 8 zum zweiten Mikrocontroller 26 der zweiten Elektronikbaugruppe 21 übertragen.

Die weiteren parallelen digitalen Signalleitungen c sind dafür vorgesehen, eine schnelle Übertragung der über die zweite Leiterplatte PCB2 geführten digitalen Prozeßsignale zu dem ersten Mikrocontroller 16 zu ermöglichen.

In einer besonderen Ausgestaltung ist der zweiten Mikrocontroller 26 mit einer parametrierbaren Eingangssignalfilterung für die Filterung der digitale Eingangssignale verbunden. Die Eingangssignalfilterung ist als eine der Funktionen der Betriebssoftware FW2 des zweiten Mikrocontrollers 26 realisiert.

Die vom Prozess bereitgestellten analogen Eingangssignale Al und die von der Zentralbaugruppe 1 bereitgestellten Analogwertausgaben AO können optional über den zweiten Mikrocontroller 26 geführt werden. Dabei nutzen die analogen Eingangssignale Al und die Analogwertausgaben AO teilweise die Hardwarestruktur des zweiten Mikrocontrollers 26. Die analogen Eingangssignale Al werden über einen Analog-Digitalwandler ADC des zweiten Mikrocontrollers 26 erfasst und von der Betriebssoftware FW2 verarbeitet, Ausgangswerte für den Analogausgang werden von der Betriebssoftware FW2 verarbeitet und über die Ein-/Ausgänge Port4 des zweiten Mikrocontrollers 26 einen zusätzlichen Digital-/Analogwandler DAC übertragen. Dadurch wird die beanspruchte Rechenleistung des ersten Mikrocontrollers 16 deutlich reduziert.

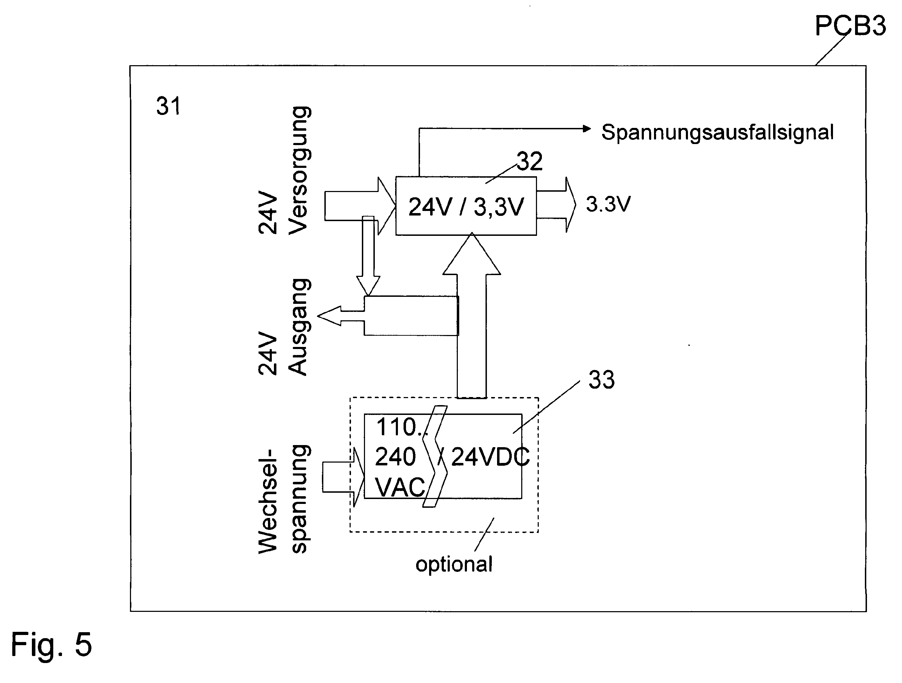

**Fig.** 5 eine beispielhafte Ausführung der dritten Elektronikbaugruppe 31 mit der Spannungsversorgung für die Zentralbaugruppe 1.

Die Spannungsversorgung der Zentralbaugruppe 1 wird üblicherweise mit einem 24V-Eingangsignal gespeist, welches mittels eines ersten Spannungswandlers 32 in ein Systemspannungssignal bzw. Spannungsversorgungssignal 36 (typischerweise 3,3V) für die Mikrocontroller 16, 26 umgewandelt wird.

Der erste Spannungswandler 32 stellt weiterhin ein 24V- Ausgangssignal und das Spannungsausfallsignal 34 für den ersten Mikrocontroller 16 bereit.

Die Spannungsversorgung für die Zentralbaugruppe 1 kann optional auch ein Netzteil bzw. einen zweiten Spannungswandler 33 aufweisen, welcher ein Wechselspannungssignal, beispielsweise 110-240 VAC, in ein Gleichspannungssignal, beispielsweise 24 VDC umwandelt und das 24V Gleichspannungssignalsignal dem Automatisierungsgerät für den ersten Spannungswandler 32 als 24V- Ausgangssignal bereitstellt.

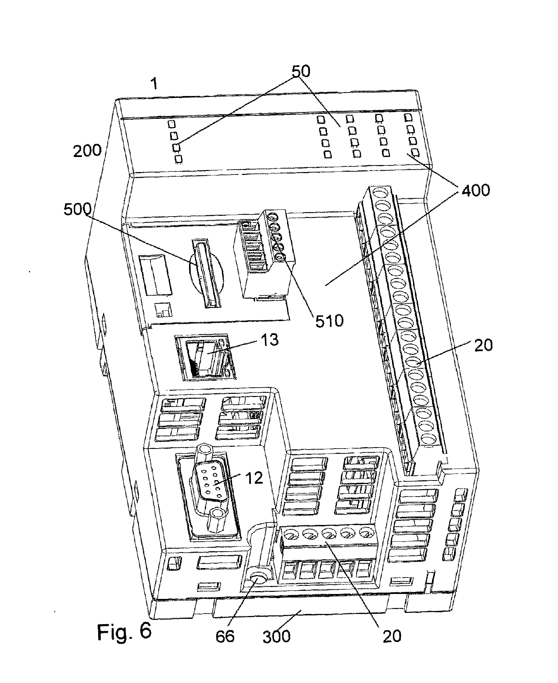

**Fig.** 6 zeigt eine beispielhafte Ausführung des Gehäuses 200 der Zentralbaugruppe 1 für ein flexibles erweiterbares Automatisierungsgerät zur Steuerung und/oder Überwachung eines technischen Prozesses auf dessen Gehäuseunterteil 300 die dritte Elektronikbaugruppe 31 für die Spannungsversorgung der Zentralbaugruppe 1 angeordnet ist sowie einer Gehäusefrontseite 400.

An der Gehäusefrontseite 400 sind die serielle Schnittstelle 12, die Ethernet-Schnittstelle 13, eine, vorzugsweise abdeckbare, Vorrichtung 500 als Steckplatz für die Aufnahme des nachrüstbaren Zubehörs, ein Stecker 510 für diese Vorrichtung sowie Anschlusselemente 20 angeordnet.

Die abdeckbare Vorrichtung 500 mit den Steckplätzen ist für die Aufnahme von austauschbaren Leiterplatten für weitere Interfaceschaltungen, beispielsweise für eine zusätzliche serielle Schnittstelle, als Sockel für Speicherkarten und/oder zur Aufnahme einer Leiterplatte für eine Echtzeituhr vorgesehen.

Weiterhin weist die Gerätefrontseite 400 Anzeigeelemente 50 für die Anzeige der Ein- und Ausgabemodule auf, die als Lichtleiter ausgeführt sind. Die Lichtleiter sind dafür vorgesehen, das Licht an einer festgelegten Stelle zu bündeln und kontaktlos auf die Frontseite 400 der Zentralbaugruppe 1 zu übertragen. Durch das in den verwendeten Lichtleitern gebündelte Licht wird somit in vorteilhafter Weise erreicht, dass das Licht nur an einer Stelle auf der Frontseite 4 der Zentralbaugruppe 1 ausgegeben wird.

In einer besonderen Ausführungsform der Zentralbaugruppe 1 ist diese für eine Wandmontage vorgesehen. Dazu sind die dritte Leiterplatte PCB3 und das Gehäuseunterteil 300 mit wenigstens einem Durchbruch 66 versehen, der zur Aufnahme von Befestigungsmitteln, vorzugsweise Schrauben, für die Wandmontage vorgesehen ist.

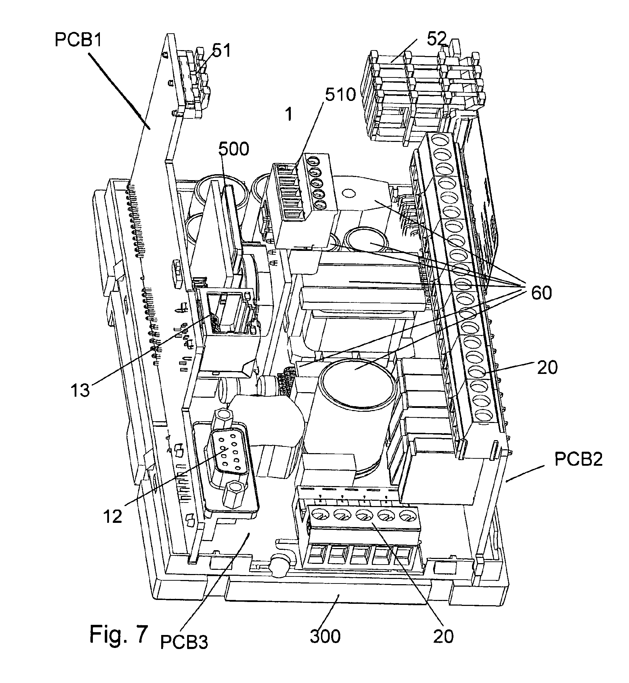

**Fig.** 7 zeigt eine beispielhafte Ausführung der Leiterplatten PCB1, PCB2, PCB3 der Zentralbaugruppe 1 mit darauf angeordneten Elektronikbaugruppen 11, 21, 31 für eine Zentraleinheit, eine Spannungsversorgung 60 und interne Ein- und Ausgabemodule.

Die drei Elektronikbaugruppen 11, 21, 31 der Zentralbaugruppe 1 sind jeweils auf einer separaten Leiterplatte PCB1, PCB2, PCB3 angeordnet. Die dritte Leiterplatte PCB3, mit der Spannungsversorgung der Zentralabbaugruppe 1, die der Gerätefrontseite 400 der Zentralbaugruppe 1 gegenüberliegt, ist erfindungsgemäß auf dem Gehäuseunterteil 300 zwischen der ersten Leiterplatte PCB1 und der zweiten Leiterplatte PCB2 angeordnet.

Die Leiterplatten PCB1, PCB2, PCB3 sind im wesentlichen in einem rechten Winkel zueinander angeordnet, wobei die dritte Leiterplatte zwischen der ersten die Zentraleinheit und die Ethernet-Schnittstelle aufnehmende Leiterplatte PCB1, und der zweiten, die internen Ein- und Ausgabemodule mit dem Anschlusselement 20 aufnehmenden Leiterplatte PCB2, angeordnet ist.

Auf der ersten und zweiten Leiterplatte PCB1, PCB2 der Zentralbaugruppe 1 sind jeweils die Anzeigemittel 50 aus einem ersten und einem zweiten Lichtleiter 51, 52 gebildet.

Nachrüstbares Zubehör 500 und 510 ist über Stecker auf der ersten bzw. dritten Leiterplatte PCB1, PCB3 mit der Elektronikbaugruppe 11 verbindbar.

**Fig.** 8 zeigt die elektrische und mechanische Verbindung 7 der im rechten Winkel aufeinander stehenden Leiterplatten PCB1, PCB2, PCB3 der Zentralbaugruppe 1 miteinander sowie die Anordnung der Lichtleiter 51, 52 auf der ersten und zweiten Leiterplatte PCB1, PCB2 sowie den Stecker 12 für eine Kommunikationsschnittstelle und den Stecker 3 für den Ein-/Ausgabebus.

Zur Verbindung der Leiterplatten PCB1, PCB2, PCB3 untereinander weisen die erste und die zweite Leiterplatte PCB1, PCB2 in einer bevorzugten Ausführungsform eine Vielzahl von gebogenen Stiften auf, die durch in der dritten Leiterplatte PCB3 vorgesehene Öffnungen geführt und, beispielsweise mittels eines Wellenlötprozesses, verlötet sind.

Die elektrische Verbindung zwischen den Leiterplatten PCB1, PCB2, PCB3 wird vorzugsweise durch Lötstifte realisiert.

Durch die vorab beschriebene elektrische und mechanische Verbindung 7 der in der Zentralbaugruppe 1 angeordneten Leiterplatten PCB1, PCB2, PCB3 entfallen teuere Steckverbindungen und es wird eine bessere mechanische Stabilität erreicht.

Auf der dritten Leiterplatte PCB3 ist weiterhin beispielhaft der Durchbruch 66 zur Aufnahme von Befestigungsmitteln für eine Wandmontage der Zentralbaugruppe 1 gezeigt.

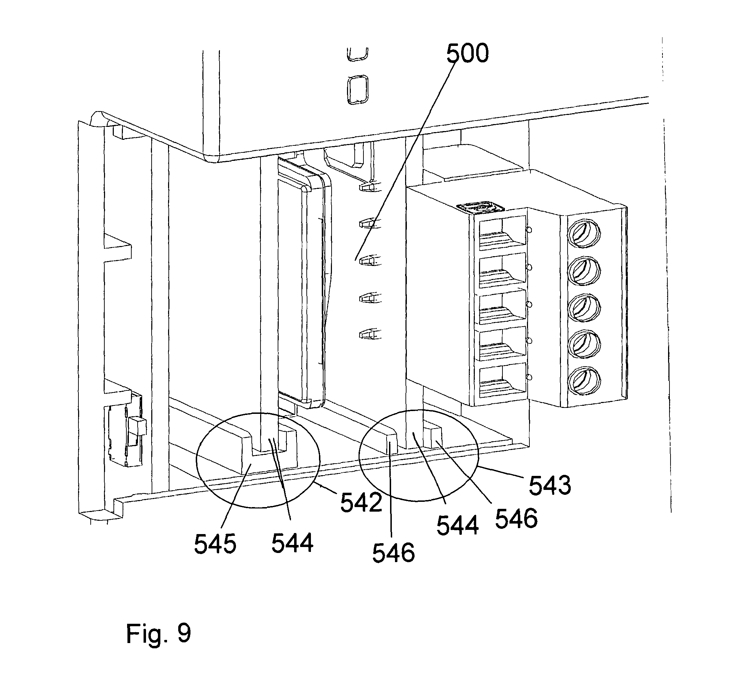

**Fig.** 9 zeigt eine Ausführungsform der auf der ersten bzw. dritten Leiterplatte PCB1, PCB3 befindlichen abdeckbaren Vorrichtung 500 als Steckplatz für die Aufnahme von wenigstens einer nachrüstbaren Leiterplatte 544, wobei die Leiterplatte 544 beispielsweise für zusätzliche Schnittstellen, Speicherkarten und/oder zur Aufnahme einer Echtzeituhr vorgesehen ist.

In einer ersten Ausführungsform 542 der Vorrichtung 500 kann die nachzurüstende Leiterplatte 544, beispielsweise in einen Sockel, der aus einer U-förmig ausgebildeten Schiene 545 gebildet wird, eingeschoben werden.

In einer weiteren Ausführungsform 543 wird die Vorrichtung 500 zur Aufnahme der nachzurüstenden Leiterplatte 544 aus zwei langgestreckten schienenförmigen Elementen 546 gebildet, zwischen die die nachzurüstende Leiterplatte 544 eingeschoben wird.

Zur Aufnahme der Leiterplatte 544 sind die langgestreckten quaderförmigen Elemente 546 bzw. die U-förmig ausgebildete Schiene 545 an ihren innenliegenden der einzuschiebenden Leiterplatte 544 zugeneigten Enden abgeschrägt oder abgerundet, um so die Aufnahme der Leiterplatte 544 zu erleichtern.

### Bezugszeichenliste

- 1: Zentralbaugruppe
- 2: externes Erweiterungsmodul, externes Ein-/ Ausgabemodul
- 3: Ein-/Ausgabebus, Stecker für Ein-/Ausgabebus
- 4: Schnittstelle der Erweiterungsmodule zum Prozess
- 5: Schnittstelle der Zentralbaugruppe zum Prozess
- 6: Spannungsversorgung für die Zentralbaugruppe
- 7: Verbindung der Träger untereinander
- 8: Adress/Daten-Steuerungsbus
- 9: Vorrichtung zum Initialisieren der Anfangskonfiguration
- 10: Bus-Logikmodul
- 11: erste Elektronikbaugruppe
- 12: serielle Schnittstelle
- 13: Ethernet-Schnittstelle
- 14: Schnittstelle für nachrüstbares Zubehör
- 15: weitere Schnittstelle
- 16: erster Mikrocontroller
- 17: flüchtiger Speicher
- 18: Flash-Speicher
- 19: Anschluss für Spannungsausfalldetektionssignal
- 20: Anschlusselemente
- 21: zweite Elektronikbaugruppe
- 26: zweiter Mikrocontroller
- 27: galvanische Trennung
- 31: dritte Elektronikbaugruppe
- 32: erster Spannungswandler
- 33: zweiter Spannungswandler
- 34: Spannungsausfallsignal
- 36: Spannungsversorgung für den Mikrocontroller
- 40: Daten- bzw. Signalspeicher
- 50: Anzeigeelement
- 51: erster Lichtleiter
- 52: zweiter Lichtleiter
- 60: Spannungsversorgung für die Zentralbaugruppe
- 66: Durchbruch
- 200: Gehäuse
- 300: Gehäuseunterteil
- 400: Gehäusefrontseite
- 500: Vorrichtung zur Aufnahme von nachrüstbarem Zubehör
- 510: Stecker für Vorrichtung zur Aufnahme von nachrüstbarem Zubehör
- 541: Öffnung zur Aufnahme zusätzlicher Leiterplatten
- 542: erste Ausführungsform zur Aufnahme einer zusätzlichen Leiterplatte
- 543: zweite Ausführungsform zur Aufnahme einer zusätzlichen Leiterplatte
- 544: zusätzliche Leiterplatte
- 545: Sockel, U-förmige Schiene
- 546: langgestrecktes quaderförmiges Element
- 601, 602: Ein- und Ausgabeschaltungen
- a: Verbindung über serielle Schnittstelle für die Kommunikation des ersten Mikrocontrollers mit dem weiteren Mikrocontroller
- b: parallele digitale Signalleitungen für schnelle Ausgangssignale von der ersten Elektronikbaugruppe
- c: parallele digitale Signalleitungen für schnelle direkte Eingangssignale zur ersten Elektronikbaugruppe
- ADC: Analog-Digitalwandler
- DAC: Digital-Analogwandler
- FW: Betriebssystem/ Firmware
- FW2: Betriebsoftware/ Firmware
- PROGR: Anwenderprogramm
- PCB1: erster Träger zur Aufnahme der ersten Elektronikbaugruppe der Zentralbaugruppe
- PCB2: zweiter Träger zur Aufnahme der zweiten Elektronikbaugruppe der Zentralbaugruppe
- PCB3: dritter Träger zur Aufnahme der dritten Elektronikbaugruppe der Zentralbaugruppe
- PCB4: Träger zur Aufnahme der Elektronikbaugruppe für die externen Ein-/ Ausgabemodule
- PROGR: Anwenderprogramm
- RS: Run-Stop Schalter
- SLS: SLS- Signal
- EA1, EA2: Elektronikbaugruppen der externen Ein-/Ausgabemodule
- SPI, SCC3, SCC4, SMC1, FEC2: Anschlüsse für parametrierbare serielle Schnittstellen des Mikrocontrollers

## Patentansprüche

1. Zentralbaugruppe für ein flexibles erweiterbares Automatisierungsgerät mit wenigstens einem über einen Ein-/Ausgabebus (3) anschließbares externes, vorzugsweise als externes Ein-/ Ausgabemodul ausgeführtes, Erweiterungsmodul (2), wobei im Gehäuse (200) der Zentralbaugruppe eine Schnittstelle für den Anschluss des externen Ein-/ Ausgabemoduls, eine erste Elektronikbaugruppe (11) mit einer als Mikrocontroller ausgeführten Zentraleinheit, eine zweite Elektronikbaugruppe (21) mit Ein- und Ausgängen für den Anschluss von Prozesssignalen und eine dritte Elektronikbaugruppe (31) zur Spannungsversorgung der Zentralbaugruppe angeordnet sind, **dadurch gekennzeichnet, dass**
- die erste Elektronikbaugruppe (11) der Zentralbaugruppe einen ersten Mikrocontroller (16), einen flüchtigen Speicher (17) zur Speicherung von Daten eines Betriebssystems, eines Anwenderprogramms und/oder von Variablen des Anwenderprogramms, und einen Flashspeicher (18) für eine nullspannungssicheren Zwischenspeicherung der Daten aufweist,
- in den Speichern (17), (18) jeweils wenigstens ein vom ersten Mikrocontroller (16) ausführbares Anwenderprogramm (PROGR) und/oder Betriebssystem (FW) abgelegt sind,
- im Anwenderprogramm (PROGR) eine erste Funktion integriert ist, welche die Daten bei einem Ausfall der Spannungsversorgung der Zentralbaugruppe im Flash-Speicher (18) ablegt, und
- im Anwenderprogramm (PROGR) eine zweite Funktion integriert ist, welche bei einer Spannungswiederkehr mittels der zweiten Funktion die zuvor im Flash-Speicher (18) abgelegten Daten in den flüchtigen Speicher (17) kopiert.

2. Zentralbaugruppe nach Anspruch 1, **dadurch gekennzeichnet, dass** die im Flash-Speicher (18) der Zentralbaugruppe gespeicherten Daten remanente Daten sind, die bei Betrieb des Automatisierungsgerätes im flüchtigen Speicher (17) gespeichert und durch das Anwenderprogramm (PROGR) oder das Betriebssystem (FW) nutzbar sind.

3. Zentralbaugruppe nach einem der vorherigen Ansprüche, **dadurch gekennzeichnet, dass** zum Datenaustausch zwischen dem flüchtigen Speicher (17) und dem Flash-Speicher (18) interner Adress/Daten-Steuerungsbus (8) vorgesehen ist.

4. Zentralbaugruppe nach einem der vorherigen Ansprüche, **dadurch gekennzeichnet, dass** die Zentralbaugruppe interne Ein-/Ausgänge (601, 602) sowie Anschlusselemente (20) für eine direkte Verbindung zu den Prozeßsignalen aufweist.

5. Zentralbaugruppe nach einem der vorherigen Ansprüche, **dadurch gekennzeichnet, dass** die zweite Elektronikbaugruppe (21) einen zweiten Mikrocontroller (26) aufweist, welcher über Ein- und Ausgangsschaltungen (601, 602) mit den Ein- und Ausgängen der ersten Elektronikbaugruppe (11) verbunden ist und die an den internen Ein- und Ausgängen anliegenden Signale für den ersten Mikrocontroller (16) steuert und auswertet.

6. Zentralbaugruppe nach Anspruch 4, **dadurch gekennzeichnet, dass** im zweiten Mikrocontroller (26) eine parametrierbaren Eingangssignalfilterung für digitale Eingangssignale implementiert ist.

7. Zentralbaugruppe nach Anspruch 4 oder 5, **dadurch gekennzeichnet, dass** im zweiten Mikrocontroller (26) eine schnell arbeitenden Zählerfunktion integriert ist.

8. Zentralbaugruppe nach einem der Ansprüche 4 bis 6, **dadurch gekennzeichnet, dass** für die Realisierung von Analogwertmessungen und Analogwertausgaben teilweise die Hardwarestruktur des zweiten Mikrocontrollers (26) nutzbar ist, wobei, wobei die Analogwerteingaben über einen Analog-Digitalwandler (ADC) des zweiten Mikrocontrollers (26) erfasst und von einer Betriebssoftware (FW2) verarbeitet werden, die Ausgangswerte für den Analogausgang von der Betriebssoftware (FW2) verarbeitet und über die Ein-/Ausgänge (Port4) des zweiten Mikrocontrollers (26) an einen Digital-/Analogwandler (DAC) übertragen werden.

9. Zentralbaugruppe nach einem der Ansprüche 4 bis 7, **dadurch gekennzeichnet, dass** der erste Mikrocontroller (16) über eine serielle Kommunikationsschnittstelle mit dem zweiten Mikrocontroller (26) verbunden ist.

10. Zentralbaugruppe nach einem der Ansprüche 4 bis 8, **dadurch gekennzeichnet, dass** der erste Mikrocontroller (16) für eine schnelle Signalübertragung über parallele digitale Signalleitungen mit dem zweiten Mikrocontroller (26) verbunden ist.

11. Zentralbaugruppe nach einem der vorherigen Ansprüche, **dadurch gekennzeichnet, dass** die Elektronikbaugruppen (11), (21), (31) der Zentralbaugruppe jeweils auf einem separaten Träger (PCB1), (PCB2), (PCB3) angeordnet sind, wobei ein dritter Träger (PCB3) mit der dritten Elektronikbaugruppe (31) zwischen einem zweiten Träger (PCB2) mit der zweiten Elektronikbaugruppe (21) und einem ersten Träger (PCB1) mit ersten Elektronikbaugruppe (11) angeordnet ist.

12. Zentralbaugruppe nach einem der vorherigen Ansprüche, **dadurch gekennzeichnet, dass** die Zentralbaugruppe eine Ethernet-Schnittstelle und/oder eine serielle Schnittstelle aufweist.

13. Zentralbaugruppe nach einem der vorherigen Ansprüche, **dadurch gekennzeichnet, dass** die Zentralbaugruppe eine Vorrichtung (500) als Steckplatz für die Aufnahme von nachrüstbarem Zubehör aufweist.
